# EUROPÄISCHE PATENTSCHRIFT

(11) **EP 1 919 648 B1**
(45) Veröffentlichungstag und Bekanntmachung des Hinweises auf die Patenterteilung: **20.10.2010**
(21) Anmeldenummer: 06775834.2
(22) Anmeldetag: 05.08.2006
(51) Int. Cl.: B23K 10/00, B23K 9/013, B23K 9/29, B23K 9/32

(54) **VORRICHTUNG UND VERFAHREN ZUM PLASMASCHNEIDEN VON WERKSTÜCKEN MIT EINER ZWISCHEN DER DÜSE UND DEM WERKSTÜCK GEFÜHRTEN ZUSATZ-SCHMELZBAREN ELEKTRODE**
DEVICE AND METHOD FOR THE PLASMA-CUTTING OF WORKPIECES WITH AN ADDITIONAL FUSIBLE ELECTRODE GUIDED BETWEEN THE NOZZLE AND THE WORKPIECE
DISPOSITIF ET PROCEDE DE DECOUPAGE DE PIECES PAR JET DE PLASMA, LEDIT DISPOSITIF COMPORTANT UNE ELECTRODE FUSIBLE SUPPLEMENTAIRE GUIDEE ENTRE LA BUSE ET LA PIECE

(30) Priorität: 08.08.2005 DE 102005039070
(43) Veröffentlichungstag der Anmeldung: 14.05.2008
(73) Patentinhaber: Kjellberg Finsterwalde Plasma und Maschinen GmbH, 03238 Finsterwalde (DE)
(72) Erfinder: MADEJA, Klaus, 06347 Gerbstedt (DE); LAURISCH, Frank, 03238 Finsterwalde (DE); RÜCKERT, Roland, 03238 Finsterwalde (DE); KRINK, Volker, 03238 Finsterwalde (DE)
(74) Vertreter: Pfenning, Meinig & Partner GbR
(86) Internationale Anmeldenummer: PCT/DE2006/001398
(87) Internationale Veröffentlichungsnummer: WO 2007/016921

(56) Entgegenhaltungen:
- EP-A- 0 747 161
- DD-A1- 277 028
- DE-A1- 2 334 470
- DE-A1- 10 143 100
- US-A- 2 982 845
- US-A- 3 312 566
- US-A- 3 604 889

## Beschreibung

Die Erfindung betrifft eine Vorrichtung und ein Verfahren zum Plasmaschneiden von Werkstücken, die auch für Werkstücke, die nicht oder nur teilweise aus einem elektrisch leitenden Werkstoff gebildet sind gemäß dem Oberbegriff der Ansprüche 1 und 15 (siehe, z.B., US 3 312 566).

Als Plasma wird ein thermisch hoch aufgeheiztes elektrisch leitfähiges Gas bezeichnet, das aus positiven und negativen Ionen, Elektronen sowie angeregten und neutralen Atomen und Molekülen besteht.

Als Plasmagas werden unterschiedliche Gase, z. B. das einatomige Argon und/oder die zweiatomigen Gase Wasserstoff, Stickstoff, Sauerstoff oder Luft eingesetzt. Diese Gase ionisieren und dissoziieren durch die Energie des Plasmalichtbogens.

Der Plasmastrahl kann in seinen Parametern durch die Gestaltung der Düse und Elektrode stark beeinflusst werden. Diese Parameter des Plasmastrahls sind z.B. der Strahldurchmesser, die Temperatur, Energiedichte und die Strömungsgeschwindigkeit des Gases.

Beim Plasmaschneiden beispielsweise wird das Plasma durch eine Düse, die gas- oder wassergekühlt sein kann, eingeschnürt. Dadurch können Energiedichten bis 2x10⁶ W/cm² erreicht werden. Im Plasmastrahl entstehen Temperaturen bis 30.000 °C, die in Verbindung mit der hohen Strömungsgeschwindigkeit des Gases sehr hohe Schneidgeschwindigkeiten an allen elektrisch leitfähigen Werkstoffen realisieren.

Das Plasmaschneiden ist heute ein etabliertes Verfahren zum Schneiden elektrisch leitender Werkstoffe wobei je nach Schneidaufgabe unterschiedliche Gase und Gasgemische eingesetzt werden.

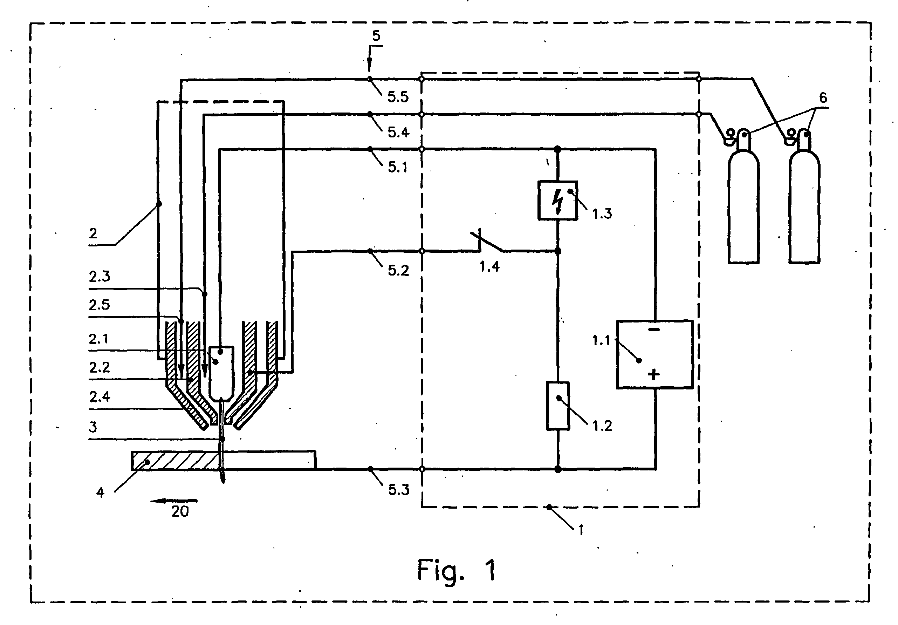

Eine übliche Anordnung ist in Fig. 1 dargestellt. Dabei fließt der Schneidstrom von der Stromquelle 1 zum Plasmabrenner 2 über den Plasmastrahl 3 zum Werkstück 4 und dann zurück zur Stromquelle 1.

Der Plasmabrenner besteht im Wesentlichen aus dem Plasmabrennerkopf mit einem Strahlerzeugungssystem, bestehend aus der Elektrode 2.1, der Düse 2.2 der Gaszuführung 2.3 und dem Brennerkörper, der die Zuführung der Medien (Gas, Kühlwasser und Strom) realisiert und das Strahlerzeugungssystem aufnimmt. Zusätzlich kann um die Düse 2.2 des Plasmabrenners eine Sekundärgaskappe 2.4 zur Zuführung eines Sekundärmediums, z.B. Gas, angebracht sein. Bei der Elektrode 2.1 des Plasmabrenners handelt es sich um eine nicht abschmelzende Elektrode 2.1, die im Wesentlichen aus einem Hochtemperaturwerkstoff, wie z.B. Wolfram, Zirkonium oder Hafnium besteht und dadurch eine sehr lange Lebensdauer hat. Die Düse besteht meist aus Kupfer und schnürt den Plasmastrahl 3 ein.

Für den Schneidprozess wird zunächst ein Pilotbogen, der zwischen Katode 2.1 und Düse 2.2 mit geringem Strom (z.B. 10 - 30 A) und damit geringer Leistung brennt, z.B. mittels Hochspannung, die durch das Zündgerät 1.3 erzeugt wird, gezündet. Der Strom des Pilotbogens wird durch den Widerstand 1.2 begrenzt. Dieser energiearme Pilotlichtbogen bereitet durch teilweise Ionisation die Strecke zwischen Plasmabrenner und Werkstück 4 für den Hauptbogen vor. Berührt der Pilotbogen das Werkstück 4, kommt es durch den vom Widerstand 1.2 erzeugten Potentialunterschied zwischen Düse 2.2 und Werkstück 4 zur Ausbildung des Schneidlichtbogens. Dieser brennt dann zwischen der Elektrode 2.1 und dem Werkstück 4 mit meist größerem Strom (z. B. 20-900A) und damit auch größerer Leistung. Der Schaltkontakt 1.4 wird geöffnet und die Düse 2.2 von der Stromquelle 1.1 potentialfrei geschaltet. Diese Betriebsweise wird auch als direkte Betriebsweise bezeichnet. Dabei wird das Werkstück 4 der thermischen, kinetischen und elektrischen Wirkung des Plasmastrahls 3 ausgesetzt. Dadurch ist das Verfahren sehr effektiv und es können Metalle bis zu großen Dicken, z.B. 180 mm bei 600 A Schneidstrom mit einer Schneidgeschwindigkeit von 0,2 m/min geschnitten werden.

Ein Nachteil dieses Verfahrens ist, dass nur elektrisch leitfähige Materialien geschnitten werden können, weil der Strom von der Stromquelle 1.1 über Leitungen zur Elektrode 2.1 des Plasmabrenners durch den Plasmastrahl 3 über das an die Stromquelle 1.1 angeschlossene Werkstück 4 zurück fließt. Probleme gibt es auch dann, wenn ein elektrisch leitfähiges Material nur schwer an den Werkstückanschluss der Plasmaschneidanlage angeschlossen werden kann, z.B. bei schwerer Zugänglichkeit. Dies kann unter anderem in kontaminierten oder verseuchten Bereichen der Fall sein, wenn der Plasmabrenner mit Hilfe eines fern bedienten Manipulators geführt wird.

Ein weiterer Nachteil dieses Verfahrens ist, dass die max. Dicke des zu schneidenden Materials auf 180 mm begrenzt ist. Es können prinzipiell auch dickere Metalle geschnitten werden. Allerdings ist die Schneidgeschwindigkeit dann so gering, dass die Oberseite des Werkstückes bereits vor dem Durchschneiden so weit ausgespült ist, dass der Hauptlichtbogen keinen Kontakt mehr zum Werkstück 4 findet, dadurch abreißt und dann verlischt.

Zum Schneiden elektrisch nicht leitender Werkstücke können Plasmabrenner in indirekter Betriebsweise eingesetzt werden. Dabei wird der indirekte Bogen wie ein Pilotbogen gezündet und brennt zwischen Elektrode 2.1 und Düse 2.2 des Plasmabrenners. Seine Leistung wird variiert und es wird auch mit etwas größeren Strömen Leistung (z.B. bis 100A) als beim Pilotbogen gearbeitet werden. Das Werkstück 4 wird dann nur der thermischen und kinetischen Wirkung des Plasmastrahls 3 ausgesetzt und geschnitten.

Dieses Verfahren ist hinsichtlich der Größe der möglichen Ströme begrenzt, da die Strombelastbarkeit der Düse 2.2 begrenzt ist und bei zu großen Strömen schnell verschleißt. Bei Verschleiß kommt es zur Beschädigung des Düsenkanals und der Plasmastrahl wird nicht mehr so gebündelt, wie es für das Schneiden erforderlich ist. Die Folge ist eine schlechte Schnittqualität, die sich in schrägen Schnittflächen, breiten Schnittfugen und langsamer Schneidgeschwindigkeit äußert.

In DD 244 260 ist ein Verfahren und Vorrichtung zum Plasmaschneiden von nichtmetallischen Werkstoffen beschrieben. Hier brennt der Plasmastrahl zwischen dem Plasmabrenner und einer unschmelzbaren und rotierenden Anode, die mit einer Zahnstange mit dem Gehäuse des Plasmabrenners verbunden ist. Die Anode befindet sich unter dem zu schneidenden Werkstück und wird mit dem Plasmabrenner mitgeführt. Ein Nachteil dieses Verfahrens ist, dass die Größe der zu bearbeitenden Bauteile wegen der Verbindung zwischen Plasmabrenner und unschmelzbarer Elektrode stark eingeschränkt ist. Weiterhin ist der Aufwand der Anordnung, wie z.B. die notwendige Wasserkühlung der Anode und deren Rotation erheblich. Trotz dieser Maßnahmen ist die Anode einer hohen Belassung und damit einem hohen Verschleiß ausgesetzt. Außerdem ist ein Einstechen in das Material und ein Schneiden von Materialien, deren Unter- oder Hinterseite nur bedingt zugänglich ist, z.B. bei Werkstückauflagen nicht möglich.

Aus US 3,312,566 und US 2,982,845 sind Düsen für den Auftrag von Werkstoff mit Plasmaunterstützung bekannt. Dabei wird Zusatzwerkstoff in das gebildete Plasma seitlich eingeführt und dadurch abgeschmolzen. In US 2,982,845 wird auch ein Pilotbogen, der zwischen zwei Elektroden in der Düse brennen soll erwähnt.

Aus EP 0 747 161 A1 ist ein Verfahren und eine Vorrichtung zum Plasmaschneiden von Beton bekannt. Dabei sollen zwei Elektroden, von denen eine innen hohl ist, eingesetzt werden. Durch die innen hohle Elektrode wird die zweite Elektrode nach und ein Gas hindurch geführt, um ein Plasma zum Schneiden zu bilden:

In DD 277 028 A1 wird eine Vorrichtung zum Lichtbogenschmelzschweißen nichtmetallischer Werkstoffe beschrieben. Auch hier werden zwei Elektroden genutzt um einen Lichtbogen zu bilden. Außerdem wird ein Gasstrahl genutzt.

Es ist daher Aufgabe der Erfindung Möglichkeiten vorzuschlagen, mit denen Plasmaschneiden an elektrisch nicht leitenden, schlecht leitenden oder an Werkstücken, die nicht elektrisch leitend mit einer Vorrichtung zum Plasmaschneiden verbunden werden können, durchführbar ist.

Erfindungsgemäß wird diese Aufgabe mit einer Vorrichtung, die die Merkmale des Anspruchs 1 und einem Verfahren nach Anspruch 15 gelöst. Vorteilhafte Ausgestaltungen und Weiterbildungen der Erfindung können staltungen und Weiterbildungen der Erfindung können mit den in den untergeordneten Ansprüchen bezeichneten Merkmalen erreicht werden.

Die erfindungsgemäße Vorrichtung ist in Wesentlichen Punkten analog zu herkömmlichen Lösungen ausgebildet. Es wird aber eine Zusatzelektrode eingesetzt, die in den Plasmastrahl zwischen der Düse, aus der der eingeschnürte Plasmastrahl austritt, und dem zu schneidenden Werkstück geführt ist. Die Zusatzelektrode sollte dabei mit ihrer vorderen Spitze in den Plasmastrahl eingeführt sein.

Da der Werkstoff der Zusatzelektrode beim Schneidprozess verbraucht wird, sollte eine zu- bzw. Nachführung möglich sein. So kann eine Zusatzelektrode als Draht oder in Form von Stäben eingesetzt werden. So kann ein Draht von einer Drahttrommel abgewickelt und so die vordere Spitze einer Zusatzelektrode im Plasmastrahlbereich gehalten werden. Bei Stäben können ähnliche Zuführeinrichtungen, beispielsweise auch mit einem Magazin zur Aufnahme einer Mehrzahl stabförmiger Zusatzelektroden, eingesetzt werden.

Die Zusatzelektrode kann auf Erdpotential gelegt, bevorzugt aber ebenfalls an die eine bzw. eine gesonderte Stromquelle elektrisch leitend angeschlossen sein.

In diesem Fall kann elektrischer Strom von der Stromquelle über die Elektrode den Plasmastrahl und die Zusatzelektrode sowie ggf. auch über das Werkstück fließen. Die Polung ist dabei beliebig, so dass die Richtung des Stromflusses entsprechend der Polung verlaufen kann.

Der über das jeweilige Werkstück und über die Zusatzelektrode fließende elektrische Strom oder auch die jeweilige elektrische Leistung kann unterschiedlich groß sein. Die Einhaltung kann durch eine Steuerung oder Regelung erfolgen. Hierfür können geeignete elektronische Steuerungen bzw. Regelungen oder auch geeignete elektrische Widerstände eingesetzt werden.

Der elektrische Anschluss der Zusatzelektrode kann mittels einer an dieser angeordneten und daran angreifenden Stromkontaktdüse realisiert sein.

An der Vorrichtung ist gemäß der Erfindung eine Einrichtung zur Ausbildung eines Pilotlichtbogens vorhanden. Mit einem Pilotlichtbogen und der damit einhergehenden Ionisierung wird der Plasmastrahl gebildet.

Die Zusatzelektrode wird gemäß der Erfindung erst nach Ausbildung des Pilotlichtbogens oder des Plasmastrahls eingeführt.

Die Zusatzelektrode kann aus oder mit einem Metall oder einer Metalllegierung gebildet sein. Geeignet sind beispielsweise Stähle, Kupfer, Aluminium, Messing oder hochtemperaturfeste Metalle, wie z.B. Wolfram, Hafnium oder Zirkonium.

Die Zusatzelektrode kann aber auch mit einer Umhüllung, die ein Pulver einschließt, ausgebildet sein. So kann-beispielsweise ein mit einem Pulver gefüllter Draht für eine Zusatzelektrode eingesetzt werden. Geeignete Pulver sind beispielsweise solche, die auch bei herkömmlichen Schweißverfahren eingesetzt werden.

Die Zusatzelektrode kann in Bezug zum Plasmastrahl in einem schräg geneigten Winkel, z.B. zwischen 10° und 90° ausgerichtet sein.

Nachfolgend soll die Erfindung an Hand von Beispielen näher erläutert werden.

abei zeigen:
Figur 1 in schematischer Form ein Beispiel nach dem Stand der Technik;
Figur 2 in schematischer Form ein erfindungsgemäßes Beispiel;
Figur 3 eine weiteres erfindungsgemäßes Beispiel und
Figur 4 ein Beispiel, das nicht im Gegenstand der Erfindung steht.

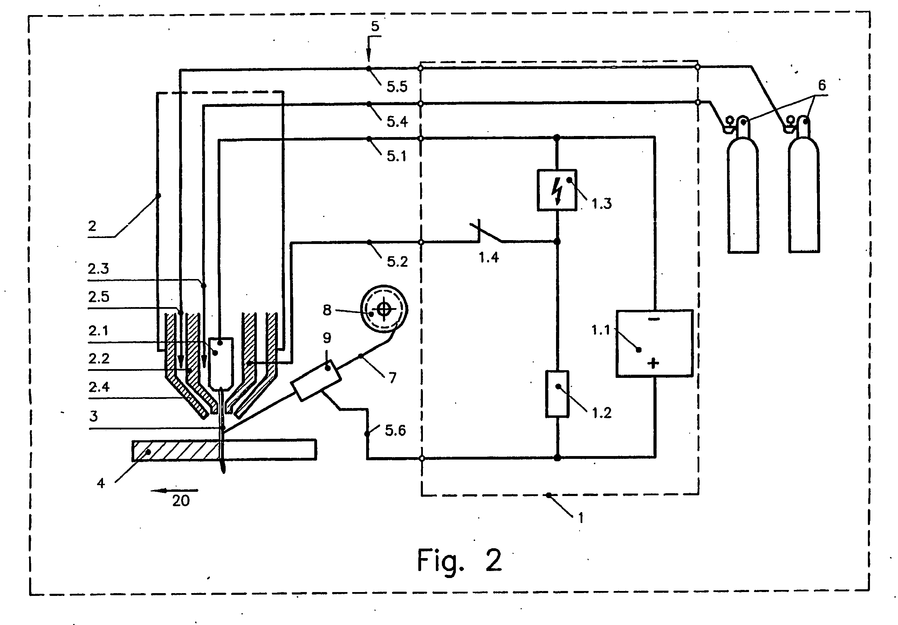

Die in Figur 2 gezeigte Vorrichtung besteht aus der Stromquelle 1.1, dem Pilotwiderstand 1.2 und dem Hochspannungszündgerät 1.3, den Plasmabrenner 2, bestehend aus der Elektrode 2.1 und der Düse 2.2, dem zugeführten Zusatzwerkstoff, z.B. einem Draht der Zusatzelektrode 7, dem Werkstück 4 und den Verbindungsleitungen/-schläuchen 5.

Dabei wird der Pilotlichtbogen mittels Hochspannungszündgerät 1.3 zwischen der Elektrode 2.1 und der Düse 2.2 des Plasmabrenners gezündet. Der Pilotwiderstand 1.2 begrenzt den Pilotstrom. Durch den Pilotbogen, der aus der Düse 2.2 austritt, wird die Strecke zwischen der Düse 2.2 und dem Draht der Zusatzelektrode 7 ionisiert. Wegen des Spannungsabfalls über den Pilotwiderstand setzt der Bogenansatzpunkt von der Düse 2.2 auf den dem Pilotlichtbogen Draht der Zusatzelektrode 7 über und der Hauptlichtbogen bildet sich aus. Der Schneidlichtbogen brennt dann zwischen der Elektrode 2.1 des Plasmabrenners und dem Draht der Zusatzelektrode 7. Der Schaltkontakt 1.4 wird geöffnet und die Düse 2.2 von der Stromquelle 1.1 potentialfrei geschaltet. Der Draht der Zusatzelektrode 7 wird von der Drahttrommel 8 kontinuierlich dem Plasmastrahl 3 zugeführt, die Stromübertragung vom Draht der Zusatzelektrode 7 zum Kabel 6.3 erfolgt über eine Stromkontaktdüse 9. Die Düse 2.2 schnürt den Plasmastrahl 3 ein, es werden Stromdichten von 20 -200 A/mm² erreicht.

Bei dieser Anordnung kann die Leistung des Hauptlichtbogens wesentlich höher sein als die bei Plasmabrennern mit indirekter Betriebsweise, in denen die Düse 2.2 die Funktion der Anode übernimmt. Nach der Erfindung kann der Draht die Funktion der Anode übernehmen und bei entsprechend großer Drahtlänge auf der Drahttrommel 8 als unendliche Elektrode angesehen werden. Die Düse 2.2 wird entlastet und hat somit eine lange Lebensdauer. Die Strom bzw. die Leistung des Plasmastrahls 3 kann der Dicke des zu schneidenden Werkstücks 4 oder der Größe des auszufugenden Volumens angepasst werden. Dabei wird das Werkstück der Wirkung des heißen Plasmastrahls 3 ausgesetzt, d.h. das Werkstück 4 wird durch die hohe Temperatur des Plasmastrahls 3 aufgeschmolzen und durch die kinetische Energie aus der Schnittfuge ausgetrieben bzw. abgetragen.

Versuche haben ergeben, dass mit 300 A bis zu 100 mm Beton mit 0,01 m/min sicher geschnitten werden kann. Im Beton vorhandener Bewehrungsstahl hatte keinen negativen Einfluss auf die Schneidgeschwindigkeit. Mit den gleichen Parametern konnte auch 100 mm Baustahl geschnitten werden. Die Schnittfuge war ca. 1 cm breit. Der Draht der Zusatzelektrode 7 wurde in einem Winkelbereich von 45 - 80° dem Plasmastrahl 3 zugeführt.

Zusätzlich kann um die Düse 2.2 eine Sekundärgaskappe 2.4 angeordnet sein, die dem Plasmastrahl 3 ein Sekundärmedium zuführt.

Mit dieser Anordnung können nicht nur elektrisch nicht leitende sondern auch elektrisch leitende Werkstoffe getrennt werden. Es kann dickes Material sicher geschnitten und ein Abreißen des Plasmastrahls 3 auch bei sehr langsamen Schneidgeschwindigkeiten, wie es bei direkten Plasmaschneiden passieren würde, verhindert werden. Auch das Schneiden unterschiedlichster Werkstoffkombinationen, auch aus elektrisch leitenden und nicht leitenden Materialien, beispielsweise Beton/Stahl, Bitumen/Stahl, Lackfarbe/Stahl oder Kunststoff-Kupfer ist damit möglich.

Ein Einsatzfall ist auch das Schneiden elektrisch leitfähiger Materialien, wenn diese nicht oder nur schwierig, z.B. bei schlechter Zugänglichkeit, mit der Plasmaschneidanlage verbunden werden können.

Weiterhin können elektrisch leitende und nicht leitende Werkstoffe mit unterbrochenen Strukturen, z.B. Rohrbündel, Sandwichbauteile usw. gut geschnitten werden. Dabei können die Hohlräume sowohl mit Luft als auch mit anderen Werkstoffen gefüllt sein.

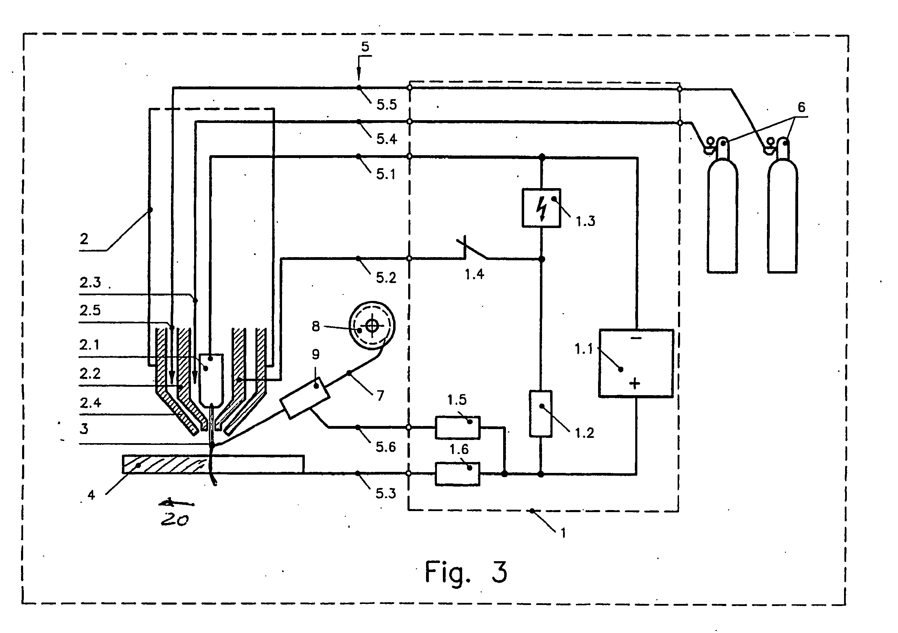

Eine spezielle Ausführungsform wird in Fig. 3 gezeigt. Diese ist besonders vorteilhaft für das Schneiden elektrisch leitender Werkstoffe oder Kombinationen elektrisch leitender Werkstoffe mit elektrisch nicht leitenden Werkstoffen. Dies kann beispielsweise eine Schicht oder Beschichtung aus Kunststoff, Farbe oder Lack, aber auch eine nicht leitende Oxidschicht eines Aluminiumwerkstoffs sein. Fig. 3 zeigt eine Kombination aus der direkten Betriebsweise einer erfindungsgemäßen Vorrichtung mit einem zugeführten Draht. Dabei fließt der Schneidstrom entweder über das Werkstück 4 oder über den Draht der Zusatzelektrode 7 oder über beide zur Stromquelle 1.1 zurück.

Dabei kann die Stromaufteilung allein abhängig von den Widerstandsverhältnissen im Plasmaprozess erfolgen. Das heißt, sie ist abhängig von den elektrischen Widerständen zwischen Elektrode 2.1 und Werkstück 4 sowie zwischen Elektrode 2.1 und Draht der Zusatzelektrode 7. Beim Schneiden von leitenden Werkstoffen mit isolierender Schicht kann diese so zunächst abgetragen werden bevor der Ansatzpunkt des Plasmastrahls 3 vom Draht der Zusatzelektrode 7 auf das leitende Werkstück 4 überspringt. Diese kombinierte Betriebsweise verbindet die Vorteile beider Verfahren.

Weiterhin kann die Stromaufteilung durch die Drahtvorschubgeschwindigkeit, die Schneidgeschwindigkeit, durch den Abstand des Plasmabrenners zum Werkstück 4, durch den Abstand des Plasmabrenners zum Draht der Zusatzelektrode 7 oder eine Kombination aus diesen eingestellt werden.

Die Stromaufteilung kann aber auch sehr genau, z.B. mit Hilfe von in Fig. 3 dargestellten Widerständen 1.5 und 1.6 erfolgen. Auch elektronische Stellglieder sind hier einsetzbar, um eine gesteuerte oder geregelte Stromaufteilung zur Beeinflussung der Schneidleitung und Schnittqualität vorzunehmen.

Dabei kann der Draht der Zusatzelektrode 7 dem Plasmastrahl 3 aus unterschiedlichen Richtungen, beispielsweise schleppend, stechend oder seitlich und in unterschiedlichen Winkeln zugeführt werden. Wichtig ist eine sichere Isolierung zwischen dem Potential des Zusatzwerkstoffs (Draht, Stromkontaktdüse 9, Drahttrommel 8) und der Düse 2.2 und der Sekundärgaskappe 2.4, die beispielsweise durch isolierende Werkstoffe, Gasströmungen u.ä. realisiert werden kann. Es besteht die Möglichkeit, in elektrisch nicht leitendes und elektrisch leitendes Material einzustechen und unterschiedlichste Konturen auszuschneiden. Dabei kann der Plasmabrenner manuell, mechanisiert und automatisch geführt werden.

Der Draht wird gemäß der Erfindung zwischen dem Plasmabrenner und dem Werkstück zugeführt. Die ist vor dem Schneidprozess so, beim Schneiden kann es von Vorteil sein, den Draht der Zusatzelektrode 7 in die Schnittfuge dem Plasmastrahl 3 zuzuführen. Allerdings wird in diesem Fall die Richtungsunabhängigkeit des Schneidprozesses negativ beeinflusst.

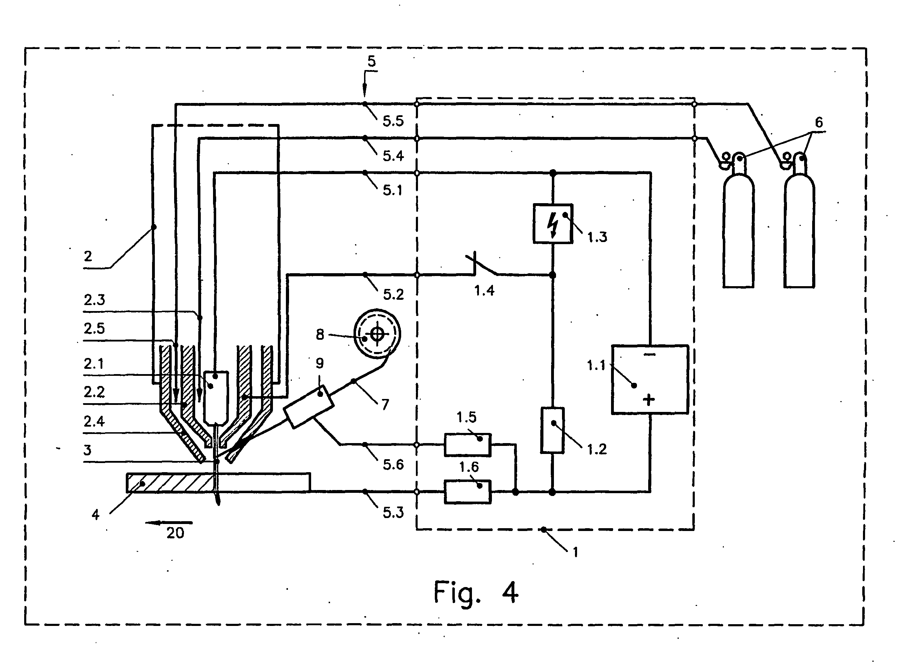

Eine spezielle Form ist die Zuführung des Zusatzwerkstoffes zwischen Düse 2.2 und Sekundärgaskappe 2.4, da hier besonders beim Einstechen ein Verschmutzen der Anordnung verhindert wird (Fig. 4). Diese Form steht nicht im Gegenstand der Erfindung.

Für das Verfahren können unterschiedliche Zusatzwerkstoffe gewählt werden. Un- und niedriglegierter Stahl fördert durch seine exotherme Reaktion den Energie-eintrag in den zu schneidenden Werkstoff. Beim Schneiden elektrisch leitender Werkstoffe erscheint die Verwendung des mit dem Werkstück 4 identischen Zusatzwerkstoffs sinnvoll, um die Schnittkanten nicht mit anderen Werkstoffen zu verunreinigen.

Weiterhin können unterschiedliche Plasmagase, z.B. Luft, Sauerstoff, Stickstoff, Argon, Wasserstoff, Helium, Kohlendioxid oder deren Kombinationen verwendet werden. Dies hängt von den zu schneidenden Werkstoffen ab. Un- und niedrig legierte Stähle werden vorwiegend mit Sauerstoff oder Luft geschnitten, während hoch legierte Stähle oft mit Argon-Wasserstoff-, Argon-Stickstoff, Argon-Wasserstoff-Stickstoff, Stickstoff-Wasserstoff-Gemisch oder nur Stickstoff geschnitten werden. Anstelle des Plasmagases können auch Wasser, Wasserdampf oder Gas-Wasser-Gemische verwendet werden. Dies gilt ebenfalls für das Sekundärmedium.

Das Verfahren kann zum Schneiden in unterschiedlichen Umgebungsbedingungen, z.B. in Atmosphäre, im Wasserbad oder unter Wasser eingesetzt werden.

Der Plasmabrenner kann bei diesem Verfahren sowohl plus- als auch minusgepolt betrieben werden.

Es besteht auch die Möglichkeit, mehrere Zusatzwerkstoffe dem Plasmastrahl 3 zuzuführen.

### Bezugszeichenliste

- 1.1: Stromquelle
- 1.2: Pilotwiderstand
- 1.3: Hochspannungszündgerät
- 1.4: Schaltkontakt
- 1.5: Widerstand für Strom über den Draht
- 1.6: Widerstand für Strom über das Werkstück
- 2.: Plasmabrenner
- 2.1: Elektrode
- 2.2: Düse
- 2.3: Gaszuführung
- 2.4: Sekundärgaskappe
- 2.5: Sekundärgaszuführung
- 3.: Plasmastrahl
- 4.: Werkstück
- 5.: Verbindungsleitungen und -schläuche
- 5.1: Verbindungsleitung Plasmaschneidanlage - Elektrode für Schneidstrom
- 5.2: Verbindungsleitung Plasmaschneidanlage - Düse für Pilotstrom
- 5.3: Verbindungsleitung Plasmaschneidanlage - Werkstück für Schneidstrom
- 5.4: Gasschlauch für Plasmagas
- 5_{:}5: Gasschlauch für Sekundärgas
- 6.: Gasversorgung
- 7.: Draht
- 8.: Drahttrommel
- 9.: Stromkontaktdüse
- 20.: Schneidrichtung

## Patentansprüche

1. Vorrichtung zum Plasmaschneiden von Werkstücken (4), bei der in einem Plasmabrenner in einer Düse (2.2) eine Elektrode (2.1) angeordnet ist, die Düse und die Elektrode(2.1) elektrisch leitend mit einer elektrischen Stromquelle verbunden sind, dabei mindestens eine Zuführung (2.3) für ein Gas zur Düse (2.2) vorhanden und ein aus der Düse (2.2) austretender Plasmastrahl auf ein Werkstück (4) gerichtet ist;
**dadurch gekennzeichnet, dass**
außerdem eine Einrichtung zur Zündung eines zwischen der Elektrode (2.1) und Düse (2.2) gezündeten Pilotlichtbogens vorhanden ist,
und wobei
zwischen Plasmabrenner und Werkstück (4) eine Zusatzelektrode (7), die mit der Stromquelle (1) elektrisch leitend verbunden ist, bis in den ausgebildeten Plasmastrahl (3) geführt ist.

2. Vorrichtung nach Anspruch 1, **dadurch gekennzeichnet, dass** die sich beim Schneiden verbrauchende Zusatzelektrode (7) nachführbar ist.

3. Vorrichtung nach einem der vorhergehenden Ansprüche, **dadurch gekennzeichnet, dass** die Zusatzelektrode (7) draht- oder stabförmig ausgebildet ist.

4. Vorrichtung nach einem der vorhergehenden Ansprüche, **dadurch gekennzeichnet, dass** das Werkstück (4) mit der Stromquelle (1) elektrisch leitend verbunden ist.

5. Vorrichtung nach einem der vorhergehenden Ansprüche, **dadurch gekennzeichnet, dass** die Stromquelle (1), die Elektrode (2.1), der Plasmastrahl (3) und die Zusatzelektrode (7) zu einem geschlossen elektrischen Stromkreis miteinander verschaltet sind.

6. Vorrichtung nach einem der vorhergehenden Ansprüche, **dadurch gekennzeichnet, dass** in den elektrisch leitenden Verbindungen zwischen Werkstück (4) und Stromquelle (1) sowie Zusatzelektrode (7) und Stromquelle (1) elektrische Widerstände (1.5, 1.6) vorhanden sind.

7. Vorrichtung nach einem der vorhergehenden Ansprüche, **dadurch gekennzeichnet, dass** an der Zusatzelektrode (7) eine Vorschubeinrichtung (8) zur Nachführung von Zusatzelektrodenwerkstoff in den Plasmastrahl (3) vorhanden ist.

8. Vorrichtung nach einem der vorhergehenden Ansprüche, **dadurch gekennzeichnet, dass** an der Zusatzelektrode (7) eine Stromkontaktdüse (9) angeordnet ist.

9. Vorrichtung nach einem der vorhergehenden Ansprüche, **dadurch gekennzeichnet, dass** der Werkstoff der Zusatzelektrode (7) dem Werkstückwerkstoff entspricht.

10. Vorrichtung nach einem der vorhergehenden Ansprüche, **dadurch gekennzeichnet, dass** die Zusatzelektrode (7) mit einem Metall oder einer Metalllegierung gebildet ist.

11. Vorrichtung nach einem der vorhergehenden Ansprüche, **dadurch gekennzeichnet, dass** innerhalb einer Hülle der Zusatzelektrode (7) ein Pulver aufgenommen ist.

12. Vorrichtung nach einem der vorhergehenden Ansprüche, **dadurch gekennzeichnet, dass** die Zusatzelektrode (7) bis in eine im Werkstück (4) ausgebildete Schneidfuge hineinragend geführt ist.

13. Vorrichtung nach einem der vorhergehenden Ansprüche, **dadurch gekennzeichnet, dass** die Zusatzelektrode (7) in einem schräg geneigten Winkel in Bezug zum Plasmastrahl (3) ausgerichtet ist.

14. Vorrichtung nach einem der vorhergehenden Ansprüche, **dadurch gekennzeichnet, dass** die Zusatzelektrode (7) durch eine Sekundärgaszuführung (2.5) an der Düse (2.2) geführt ist.

15. Verfahren zum Plasmaschneiden von Werkstücken, bei dem mittels einer Vorrichtung, die mindestens eine Gaszuführung zu einer Düse (2.2), eine in der Düse (2.2) angeordnete Elektrode (2.1), die mit einer Stromquelle (1) elektrisch leitend verbunden sind, aufweist,
**dadurch gekennzeichnet, dass**
ein Pilotlichtbogen gezündet und dabei ein Plasmastrahl (3) durch die Düse (2.2) auf ein Werkstück (4) gerichtet wird, und
dann zwischen dem Plasmabrenner und Werkstück (4) eine elektrisch leitend mit der Stromquelle (1) verbundene Zusatzelektrode (7) in den ausgebildeten Plasmastrahl (3) eingeführt, und
die Zusatzelektrode (7) zwischen Werkstück (4) und dem Plasmabrenner nachgeführt wird.

16. Verfahren nach Anspruch 15, **dadurch gekennzeichnet, dass** der sich beim Schneiden verbrauchende Werkstoff der Zusatzelektrode (7) nachgeführt wird.

17. Verfahren nach einem der Ansprüche 15 oder 16, **dadurch gekennzeichnet, dass** der über elektrisch leitende Verbindungen (5.1, 5.3, 5.6) von einer Stromquelle (1) über die Elektrode (2.1), den Plasmastrahl (3), das Werkstück (4) und/oder die Zusatzelektrode (7) fließende elektrische Strom geregelt oder gesteuert wird.

18. Verfahren nach Anspruch 17, **dadurch gekennzeichnet, dass** der über das Werkstück (4) und die Zusatzelektrode (7) fließende elektrische Strom jeweils separat geregelt oder gesteuert wird.

19. Verfahren nach Anspruch 17 oder 18, **dadurch gekennzeichnet, dass** die Regelung oder Steuerung unter Berücksichtigung der Zuführgeschwindigkeit der Zusatzelektrode (7) in den Plasmastrahl (3), der Schneidgeschwindigkeit, den Abstand zwischen Düse (2.2) und Werkstück (4) und/oder dem Abstand zwischen Düse (2.2) und Zusatzelektrode (7) durchgeführt wird.

20. Verfahren nach einem der Ansprüche 16 bis 19, **dadurch gekennzeichnet, dass** die Zuführgeschwindigkeit der Zusatzelektrode (7) in den Plasmastrahl (3) unter Berücksichtigung des elektrischen Stromes oder der elektrischen Leistung geregelt oder gesteuert wird.

21. Verfahren nach einem der Ansprüche 16 bis 20, **dadurch gekennzeichnet, dass** die Zusatzelektrode (7) dem Plasmastrahl (3) so zugeführt wird, dass diese feintropfig abschmilzt.

## Claims

1. An apparatus for the plasma cutting of workpieces (4), wherein an electrode (2.1) is arranged in a nozzle (2.2) in a plasma torch, the nozzle and the electrode (2.1) are electrically conductively connected to an electric power source, in this respect at least one feed (2.3) to the nozzle (2.2) is present for a gas and a plasma jet discharged from the nozzle (2.2) is directed to a workpiece (4), **characterised in that**
a device is moreover present for the ignition of a pilot light arc ignited between the electrode (2.1) and the nozzle (2.2),
and wherein
an additional electrode (7) which is electrically conductively connected to the power source (1) is led between the plasma torch and the workpiece (4) up to and into the formed plasma jet (3).

2. An apparatus in accordance with claim 1, **characterised in that** the additional electrode (7) being consumed in the cutting can be resupplied.

3. An apparatus in accordance with one of the preceding claims, **characterised in that** the additional electrode (7) is made in wire form or in bar form.

4. An apparatus in accordance with one of the preceding claims, **characterised in that** the workpiece (4) is electrically conductively connected to the power source (1).

5. An apparatus in accordance with one of the preceding claims, **characterised in that** the power source (1), the electrode (2.1), the plasma jet (3) and the additional electrode (7) are connected to one another to form a closed electric circuit.

6. An apparatus in accordance with one of the preceding claims, **characterised in that** electrical resistors (1.5, 1.6) are present in the electrically conductive connections between the workpiece (4) and the power source (1) as well as the additional electrode (7) and the power source (1).

7. An apparatus in accordance with one of the preceding claims, **characterised in that** a feed device (8) for the resupply of additional electrode material into the plasma jet (3) is present at the additional electrode (7).

8. An apparatus in accordance with one of the preceding claims, **characterised in that** a current contact nozzle (9) is arranged at the additional electrode (7).

9. An apparatus in accordance with one of the preceding claims, **characterised in that** the material of the additional electrode (7) corresponds to the workpiece material.

10. An apparatus in accordance with one of the preceding claims, **characterised in that** the additional electrode (7) is formed by a metal or a metal alloy.

11. An apparatus in accordance with one of the preceding claims, **characterised in that** a powder is received within a sleeve of the additional electrode (7).

12. An apparatus in accordance with one of the preceding claims, **characterised in that** the additional electrode (7) is guided to project into a cutting kerf formed in the workpiece (4).

13. An apparatus in accordance with one of the preceding claims, **characterised in that** the additional electrode (7) is aligned at an obliquely inclined angle with respect to the plasma jet (3).

14. An apparatus in accordance with one of the preceding claims, **characterised in that** the additional electrode (7) is guided by a secondary gas feed (2.5) at the nozzle (2.2).

15. A method for the plasma cutting of workpieces, wherein by means of an apparatus having at least one gas feed to a nozzle (2.2), an electrode (2.1) arranged in the nozzle (2.2) which are electrically conductively connected to a current source (1),
**characterised in that**
a pilot light arc is ignited and in so doing a plasma jet (3) is directed through the nozzle (2.2) onto a workpiece (4), and
then an additional electrode (7) which is electrically conductively connected to the power source (1) is introduced into the formed plasma jet (3) between the plasma torch and the workpiece (4), and
the additional electrode (7) is resupplied between the workpiece (4) and the plasma torch.

16. A method in accordance with claim 15, **characterised in that** the material of the additional electrode (7) being consumed in the cutting is resupplied.

17. A method in accordance with either of the claims 15 or 16, **characterised in that** the electric current flowing via electrically conductive connections (5.1., 5.3, 5.6) from a power source (1) via the electrode (2.1), the plasma jet (3), the workpiece (4) and/or the additional electrode (7) is regulated or controlled.

18. A method in accordance with claim 17, **characterised in that** the electric current flowing via the workpiece (4) and the additional electrode (7) is in each case separately regulated or controlled.

19. A method in accordance with either of the claims 17 or 18, **characterised in that** the regulation or control is carried out while taking account of the supply feed of the additional electrode (7) into the plasma jet (3), of the cutting speed, of the spacing between the nozzle (2.2) and the workpiece (4) and/or the spacing between the nozzle (2.2) and the additional electrode (7).

20. A method in accordance with one of the claims 16 to 19, **characterised in that** the supply speed of the additional electrode (7) into the plasma jet (3) is regulated or controlled while taking account of the electric current or of the electric power.

21. A method in accordance with one of the claims 16 to 20, **characterised in that** the additional electrode (7) is supplied to the plasma jet (3) so that it melts in fine drops.

## Revendications

1. Dispositif de découpage à jet de plasma de pièces (4), dans lequel, dans un chalumeau à plasma, une électrode (2.1) est agencée dans une buse (2.2), la buse et l'électrode (2.1) sont connectées par voie électroconductrice à une source de courant électrique, il est prévu à cet effet au moins une alimentation (2.3) d'un gaz vers la buse (2.2) et un jet de plasma sortant de la buse (2.2) est dirigé sur une pièce (4) ;
**caractérisé en ce que**
il est prévu en outre un dispositif d'amorçage d'un arc pilote amorcé entre l'électrode (2.1) et la buse (2.2),
et dans lequel
une électrode d'appoint (7), qui est connectée par voie électroconductrice à la source de courant (1), est acheminée entre le chalumeau à plasma et la pièce (4) jusqu'au jet de plasma (3) formé.

2. Dispositif selon la revendication 1, **caractérisé en ce que** l'électrode d'appoint (7) qui s'use lors de la découpe peut être acheminée en continu.

3. Dispositif selon l'une quelconque des revendications précédentes, **caractérisé en ce que** l'électrode d'appoint (7) se présente sous la forme d'un fil ou d'une tige.

4. Dispositif selon l'une quelconque des revendications précédentes, **caractérisé en ce que** la pièce (4) est connectée par voie électroconductrice à la source de courant (1).

5. Dispositif selon l'une quelconque des revendications précédentes, **caractérisé en ce que** la source de courant (1), l'électrode (2.1), le jet de plasma (3) et l'électrode d'appoint (7) sont raccordés les uns aux autres pour former un circuit électrique fermé.

6. Dispositif selon l'une quelconque des revendications précédentes, **caractérisé en ce que**, dans les connexions électroconductrices entre la pièce (4) et la source de courant (1), ainsi qu'entre l'électrode d'appoint (7) et la source de courant (1), il est prévu des résistances électriques (1.5, 1.6).

7. Dispositif selon l'une quelconque des revendications précédentes, **caractérisé en ce que**, sur l'électrode d'appoint (7), il est prévu un dispositif d'avancement (8) pour acheminer en continu le matériau de l'électrode d'appoint dans le jet de plasma (3).

8. Dispositif selon l'une quelconque des revendications précédentes, **caractérisé en ce qu'**une buse de contact de courant (9) est aménagée sur l'électrode d'appoint (7).

9. Dispositif selon l'une quelconque des revendications précédentes, **caractérisé en ce que** le matériau de l'électrode d'appoint (7) correspond au matériau de la pièce.

10. Dispositif selon l'une quelconque des revendications précédentes, **caractérisé en ce que** l'électrode d'appoint (7) est formée d'un métal ou d'un alliage métallique.

11. Dispositif selon l'une quelconque des revendications précédentes, **caractérisé en ce qu'**une poudre est confinée dans une gaine de l'électrode d'appoint (7).

12. Dispositif selon l'une quelconque des revendications précédentes, **caractérisé en ce que** l'électrode d'appoint (7) est acheminée en dépassement jusque dans une fente de coupe formée dans la pièce (4).

13. Dispositif selon l'une quelconque des revendications précédentes, **caractérisé en ce que** l'électrode d'appoint (7) est orientée sous un angle incliné en oblique par rapport au jet de plasma (3).

14. Dispositif selon l'une quelconque des revendications précédentes, **caractérisé en ce que** l'électrode d'appoint (7) est acheminée à travers une alimentation en gaz secondaire (2.5) sur la buse (2.2).

15. Procédé de découpage à jet de plasma de pièces, qui opère au moyen d'un dispositif, qui présente au moins une alimentation en gaz vers une buse (2.2) et une électrode (2.1) aménagée dans la buse (2.2), qui sont connectées par voie électroconductrice à une source de courant (1), **caractérisé en ce que** un arc pilote est amorcé et, en l'occurrence, un jet de plasma (3) est dirigé à travers la buse (2.2) sur une pièce (4), et une électrode d'appoint (7) connectée par voie électroconductrice à la source de courant (1) est introduite ensuite entre le chalumeau à plasma et la pièce (4) dans le jet de plasma formé (3), et l'électrode d'appoint (7) est acheminée en continu entre la pièce (4) et le chalumeau à plasma.

16. Procédé selon la revendication 15, **caractérisé en ce que** le matériau de l'électrode d'appoint (7) qui s'use lors de la découpe est acheminé en continu.

17. Procédé selon l'une quelconque des revendications 15 ou 16, **caractérisé en ce que** le courant électrique circulant par les connexions électroconductrices (5.1, 5.3, 5.6) d'une source de courant (1) via l'électrode (2.1), le jet de plasma (3), la pièce (4) et/ou l'électrode d'appoint (7) est régulé ou commandé.

18. Procédé selon la revendication 17, **caractérisé en ce que** le courant électrique circulant par la pièce (4) et l'électrode d'appoint (7) est régulé ou commandé de manière respectivement séparée.

19. Procédé selon la revendication 17 ou 18, **caractérisé en ce que** la régulation ou la commande est réalisée en tenant compte de la vitesse d'acheminement de l'électrode d'appoint (7) dans le jet de plasma (3), de la vitesse de découpe, de la distance entre la buse (2.2) et la pièce (4) et/ou de la distance entre la buse (2.2) et l'électrode d'appoint (7).

20. Procédé selon l'une quelconque des revendications 16 à 19, **caractérisé en ce que** la vitesse d'acheminement de l'électrode d'appoint (7) dans le jet de plasma (3) est régulée ou commandée en tenant compte du courant électrique ou de la puissance électrique.

21. Procédé selon l'une quelconque des revendications 16 à 20, **caractérisé en ce que** l'électrode d'appoint (7) est acheminée au jet de plasma (3) de sorte qu'elle fonde en fines gouttes.
